# EUROPEAN PATENT APPLICATION

(11) **EP 4 503 557 A1**
(43) Date of publication of application: **05.02.2025**
(21) Application number: 23776829.6
(22) Date of filing: 09.02.2023
(51) Int. Cl.: H04L 45/44, H04L 41/0659, H04L 45/122, H04L 45/28

(54) **DISTRIBUTED SYSTEM AND METHOD FOR CREATING COMMUNICATION PATH IN DISTRIBUTED SYSTEM**

(30) Priority: 29.03.2022 JP 2022053854
(71) Applicant: HITACHI HIGH-TECH CORPORATION, Tokyo 105-6409 (JP)
(72) Inventor: OMURA Yusuke, Tokyo 100-8280 (JP); YAMASHINA Kazushi, Tokyo 100-8280 (JP); FUNATSU Terunobu, Tokyo 100-8280 (JP); SHIGA Yuichiro, Tokyo 105-6409 (JP); SHISHIDO Daigo, Tokyo 105-6409 (JP); HOMMA Shotaro, Tokyo 105-6409 (JP); YANO Shigeru, Tokyo 105-6409 (JP)
(74) Representative: Strehl Schübel-Hopf & Partner
(86) International application number: PCT/JP2023/004334
(87) International publication number: WO 2023/188860

(57) **Abstract**

This invention addresses the problem of creating a communication path in a distributed system, with a simpler configuration. In order to solve this problem, a distributed system comprises a plurality of distributed devices consisting of a communication master station and a plurality of communication slave stations, wherein a communication port that communicates with the upstream side is dynamically updated according to the traffic volume on a communication path by which routing packets are communicated, a communication path is created on the basis thereof, and if a communication failure occurs in the distributed system, a bypass path for bypassing the communication failure is created, as a communication path.

## Description

### Technical Field

The present invention relates to a technique for generating a communication path that bypasses a failure such as a fault occurring in a network. The failure of the invention includes various abnormalities in communication such as a fault.

### Background Art

At present, various communication techniques using a network are used. As an application example of the communication technique, an industrial apparatus is exemplified. In an industrial apparatus such as a biochemical and immune analyzer, an electronic system including an analog transmission path from a plurality of control boards centrally managed to a control device such as a sensor or a motor mounted on the apparatus is generally used.

In recent years, in order to improve efficiency in design, manufacture, and maintenance of the apparatus, a distributed control system has been applied to reduce an amount of analog transmission paths and improve control performance of the apparatus by modularization and distributed arrangement of the control boards. In a distributed system including such a distributed control system, in order to reduce downtime of the apparatus (distributed control devices and distributed devices) constituting the distributed system, a redundant network including a plurality of communication paths may be used so that control communication can be continued even when a part of the apparatus fails. In such a redundant network, a plurality of communication paths can be provided between boards connected to the network. Therefore, when an appropriate communication path is not generated, an erroneous operation is caused. In addition, when a problem such as a fault occurs, it is necessary to generate a bypass path that can bypass a fault location to continue communication by using remaining redundant paths and identify a fault location to quickly perform repair.

As means for solving these problems, there is generally known a technique in which, when a fault occurs in a redundant network, a communication master station generates a bypass path based on information on a network configuration and scans whether the communication master station can communicate with each communication slave station via the bypass path to identify a fault location, and for example, PTL 1 is proposed. In PTL 1, when a communication failure occurs, among communication paths from an aggregation device to a terminal device that becomes incommunicable, a relay device that is communicable and closest to the terminal device is identified as a target device, the aggregation device generates a bypass path to the target device based on network configuration information and identifies a location between a relay device closest to the target device among relay devices that are communicable through the bypass path and the target device as a fault location.

### Citation List

### Patent Literature

PTL 1: JP2021-52311A

### Summary of Invention

### Technical Problem

However, in the technique described in PTL 1, the relay device is a device having a routing function of a router or the like, and in a protocol of a general routing function, the relay device needs to store path information to another relay device. Therefore, it is difficult to ensure a real-time property of the control communication due to the compression of a communication band, and the relay device has to prepare a storage capacity corresponding to a scale of the distributed system such as the distributed control system. Therefore, an object of the invention is to create a communication path in a distributed system with a simpler configuration.

### Solution to Problem

In order to solve the above problem, the invention provides a distributed system including a plurality of a distributed devices such as a communication master station and a plurality of communication slave stations, in which a communication port with an upstream side is dynamically updated according to a traffic volume of a communication path through which a routing packet is communicated, and based on this, a communication path is created.

An example of a more specific configuration is a distributed system including:
a communication master station; and
a plurality of communication slave stations connected to the communication master station in a downstream direction of communication, in which
the communication master station and each of the plurality of communication slave stations are connected to each other via a communication channel,
the plurality of communication slave stations respectively include a plurality of communication ports for performing communication,
any one of the plurality of communication ports is stored in advance as an upstream port for communication in an upstream direction,
a routing packet is transmitted from the communication master station to each of the plurality of communication slave stations,
a first traffic volume indicating a traffic volume of the routing packet from the communication master station is specified in each of the plurality of communication slave stations,
the first traffic volume and a second traffic volume specified before the specification are compared to determine whether a predetermined condition is satisfied,
a first communication port that has received the routing packet is specified in each of the plurality of communication slave stations,
in each of the plurality of communication slave stations, the first communication port is updated as the upstream port when the predetermined condition is satisfied, and
the communication master station creates a communication path from the communication master station in the distributed system by combining the upstream port in each of the plurality of communication slave stations and the communication channel connected to the upstream port. The invention also includes a method for creating a communication path in the distributed system.

### Advantageous Effects of Invention

According to the invention, it is possible to create a communication path in a distributed system with a simpler configuration. Problems, configurations, and effects other than those described above will become apparent from the following description of embodiments and examples.

### Brief Description of Drawings

[FIG. 1] FIG. 1 shows a configuration example of a distributed control system according to an embodiment of the invention.
[FIG. 2] FIG. 2 shows a state in which a routing packet of a distributed control system in Example 1 is transferred.
[FIG. 3] FIG. 3 is a flowchart showing processing of comparing routing packets of a communication slave station in Example 1.
[FIG. 4] FIG. 4 is a flowchart showing processing of selecting an upstream port of the communication slave station in Example 1.
[FIG. 5] FIG. 5 shows transfer of an upstream port notification of the distributed control system in Example 1.
[FIG. 6] FIG. 6 shows transfer of a routing packet in a case where a communication slave station fails in Example 2.
[FIG. 7] FIG. 7 shows transfer of an upstream port notification in the case where the communication slave station fails in Example 2.
[FIG. 8] FIG. 8 is a flowchart showing processing of identifying a fault location of a communication master station in Example 2.
[FIG. 9] FIG. 9 shows a configuration example of a distributed control system in Example 3.
[FIG. 10] FIG. 10 shows a display example in a display device in Example 3.
[FIG. 11] FIG. 11 shows an application example of each example.

### Description of Embodiments

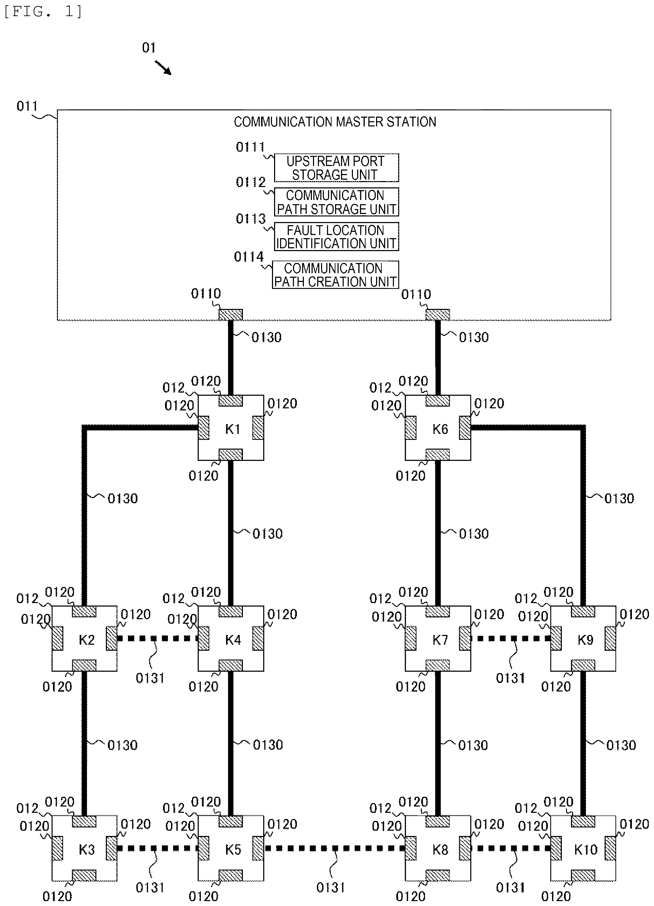

Hereinafter, an embodiment of the invention will be described. In the present embodiment, a distributed control system is used as an example of a distributed control system to control a control target including itself. FIG. 1 shows a configuration example of a distributed control system 01 according to the present embodiment. In FIG. 1, the distributed control system 01 includes a communication master station 011 and a plurality of communication slave stations 012. Here, the communication master station 011 and the communication slave station 012 correspond to a distributed device of the invention. In addition, a direction toward an upper part of the drawing, that is, a direction of communication toward the communication master station 011 is defined as an upstream direction. A direction opposite to the upstream direction is defined as a downstream direction.

In the present embodiment, in the distributed control system 01 including the communication master station 011 and the plurality of communication slave stations 012, an upstream port which is a communication port with an upstream side is dynamically updated according to a traffic volume of a communication path through which a routing packet is communicated. Based on this, a communication path is created. An example of a more specific configuration is the distributed control system 01 including:
the communication master station 011; and
the plurality of communication slave stations 012 connected to the communication master station 011 in a downstream direction of communication, in which
the communication master station 011 and each of the plurality of communication slave stations 012 are connected to each other via a communication channel (normal communication channel 0130, reduced communication channel 0131, and the like),
the plurality of communication slave stations 012 respectively include a plurality of communication ports 0120 for performing communication,
any one of the plurality of communication ports 0120 is stored in advance as an upstream port,
a routing packet is transmitted from the communication master station 011 to each of the plurality of communication slave stations 012,
a first traffic volume indicating a traffic volume of the routing packet from the communication master station 011 is specified in each of the plurality of communication slave stations 012,
the first traffic volume and a second traffic volume specified before the specification are compared to determine whether a predetermined condition is satisfied,
a first communication port that has received the routing packet is specified in each of the plurality of communication slave stations 012,
in each of the plurality of communication slave stations 012, the first communication port is updated as the upstream port when the predetermined condition is satisfied, and
the communication master station 011 creates a communication path from the communication master station 011 in the distributed control system 01 by combining the upstream port in each of the plurality of communication slave stations 012 and the communication channel connected to the upstream port.

The description of the present embodiment is finished in the above, and examples showing more specific configurations and processing contents will be described below.

### Example 1

As shown in FIG. 1, the distributed control system 01 according to this example includes the communication master station 011 and the plurality of communication slave stations 012. The communication master station 011 forms a network connected to the plurality of communication slave stations 012 via communication channels (the normal communication channel 0130, the reduced communication channel 0131, and the like), and transmits a control command of the distributed control system 01 to each of the communication slave stations. The communication slave station 012 is connected to the communication master station 011 and another communication slave station 012 via the network, and transmits input information from a control device to the communication master station 011.

Next, a configuration of each device will be described. The communication slave station 012 includes the plurality of communication ports 0120. Among them, the communication port 0120 used for transmission of its own input information and transfer of the input information from the control device of another communication slave station 012 is defined as an upstream port. The communication port 0120 used for transfer of the control command from the communication master station 011 to another communication slave station 012 is defined as a downstream port.

The communication master station 011 includes a communication port 0110, an upstream port storage unit 0111, a communication path storage unit 0112, a fault location identification unit 0113, and a communication path creation unit 0114. The upstream port storage unit 0111 stores an upstream port of the communication slave station 012 itself. The communication path storage unit 0112 stores the created communication path. The fault location identification unit 0113 identifies a fault location. The communication path creation unit 0114 creates a communication path according to a traffic volume of a routing packet.

The distributed control system 01 further includes the normal communication channel 0130 and the reduced communication channel 0131. The normal communication channel 0130 connects the communication port 0110 and the communication port 0120 or connects the communication ports 0120 so that a communication path normally used by each communication slave station 012 and the communication master station 011 has the minimum number of times of passage through the communication slave station 012. The reduced communication channel 0131 connects the communication ports 0120. In the connection, for each communication slave station 012, when one of another communication slave station 012 or the normal communication channel 0130 fails, a communication path used for communication with the communication master station 011 includes a combination of communication channels having the number of times of passage through the communication slave station 012 equal to or less than the number of times of passage through the communication slave station 012 and being communicable within a predetermined communication delay time.

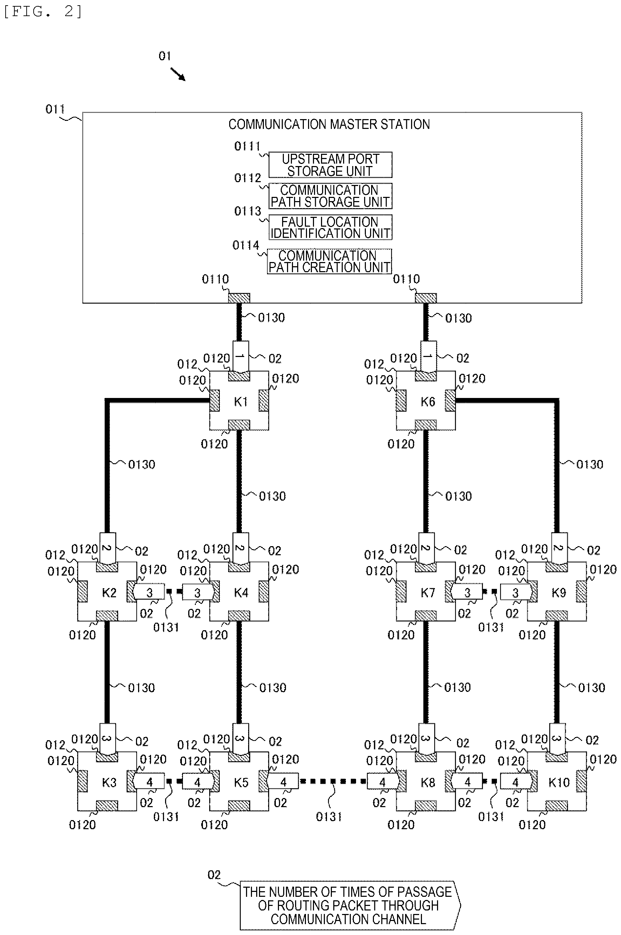

Next, a method for creating a communication path in the distributed control system 01 will be described. First, the communication path creation unit 0114 of the communication master station 011 transmits a routing packet 02 to the communication slave station 012 via the communication channel connected to the communication master station 011 itself. Here, a transmission timing of the routing packet 02 includes a time when the distributed control system 01 or the communication master station 011 is started up, a time when a failure occurs in the distributed control system 01, a predetermined period, or a periodic timing. FIG. 2 shows a state in which the routing packet 02 is transferred in the distributed control system 01 in this example. In FIG. 2, the routing packet 02 accumulates the number of times of passage through the communication channel. Therefore, the routing packet 02 is transferred via the communication slave station 012, and each communication slave station 012 receives the routing packet 02. The communication slave station 012 that has received the routing packet adds 1 to the number of times of passage through the communication channel included in the routing packet 02 to update the routing packet 02. In this way, each communication slave station 012 counts up the number of times of passage of the routing packet 02 and records the number of times of passage in the routing packet 02.

In this example, the number of times of passage through the communication channel is used, but the traffic volume through a passing path may be used. As the traffic volume, any one of the number of times of passage of the routing packet 02 through the communication slave station 012 from the communication master station 011, a time it takes for the routing packet 02 to pass from the communication master station 011, and a physical length that the routing packet 02 passes from the communication master station 011 is used. More preferably, it is desirable to use the number of times of passage through the communication channel and/or the number of times of passage through the communication slave station 012 described above. For example, a number obtained by adding the number of times of passage through the communication channel and the number of times of passage through the communication slave station 012 may be used.

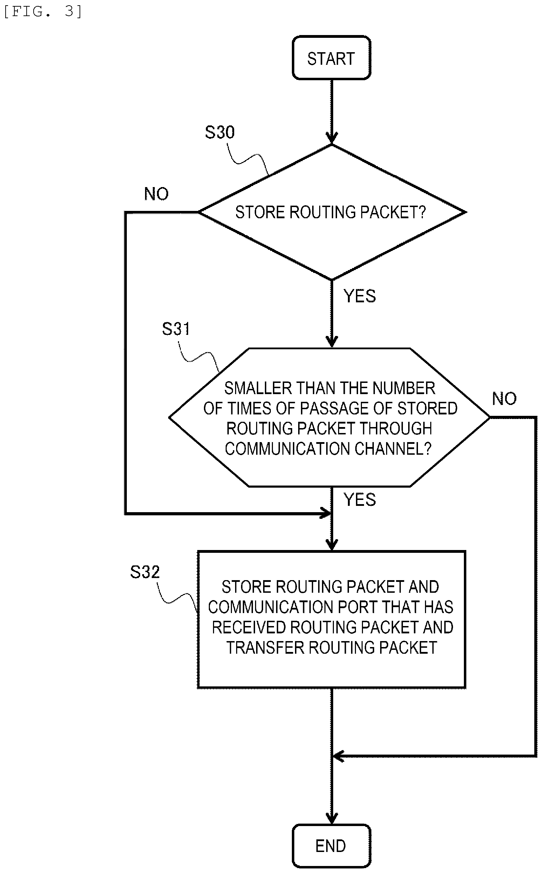

Here, in this example, when the number of times of passage through the communication channel satisfies a predetermined condition, a passing path is dynamically created and updated. More specifically, when the number of times of passage stored in each communication slave station 012 is smaller than the specified number of times of passage, a passing path is created. Hereinafter, a comparison of the number of times of passage will be described. FIG. 3 is a flowchart showing processing of comparing the routing packets 02 of the communication slave station 012 according to this example. The flowchart is executed when the communication slave station 012 updates, for example, receives the routing packet 02. In a case where a processing subject of the flowchart is described as the communication slave station 012, each communication slave station 012 constituting the distributed control system 01 is the processing subject unless otherwise specified. The same applies to the other flowcharts.

First, in step S30, the communication slave station 012 determines whether the communication slave station 012 itself stores a previous routing packet 02. As a result, if the determination is positive (YES), the processing proceeds to step S31. If the determination is negative (NO), the processing proceeds to step S32.

In step S31, the communication slave station 012 determines whether the number of times of passage of the updated routing packet 02 through the communication channel is smaller than the number of times of passage of the routing packet 02 through the communication channel stored in the communication slave station 012 itself. As a result, if the determination is positive (YES), the processing proceeds to step S32. If the determination is negative (NO), the processing ends and returns to a start state. In this step, a comparison is performed between the number of times of passage of the updated routing packet 02 through the communication channel, which is an example of a first traffic volume, and the number of times of passage of the stored routing packet 02 through the communication channel, which is an example of a second traffic volume specified before the specification.

In step S32, the communication slave station 012 specifies the updated routing packet 02 and the communication port 0120 that has received the routing packet 02. It is desirable that the communication slave station 012 stores specified contents and transfers the specified contents from the remaining communication ports 0120 included in the communication slave station 012 itself other than the communication port 0120 that has received the routing packet 02. In this way, the processing ends and returns to the start state.

The routing packet 02 received or stored (updated) last by the communication slave station 012 has the smallest number of times of passage through the communication channel among the number of times of passage of the previous routing packet 02 in the communication slave station 012. Therefore, the number of times of passage of the routing packet 02 to be compared in Step S31 may be the number of times of passage of only the routing packet 02 stored last by the communication slave station 012. In this example, the communication slave station 012 is described as storing the previous routing packet 02, but may also store in advance and use the number of times of passage thereof. The same applies to the following description.

In addition, when storing the routing packet 02 and the communication port 0120 that has received the routing packet 02 in step S33, the communication slave station 012 may delete the previous routing packet 02 and the previous communication port 0120. Further, the communication slave station 012 may have a storage capacity capable of storing one set of the routing packet 02 and the communication port 0120. The communication slave station 012 transfers the routing packet 02 by increasing the number of times of passage of the routing packet 02 through the communication channel, and thus the routing packet 02 is eventually no longer transferred in the distributed control system 01.

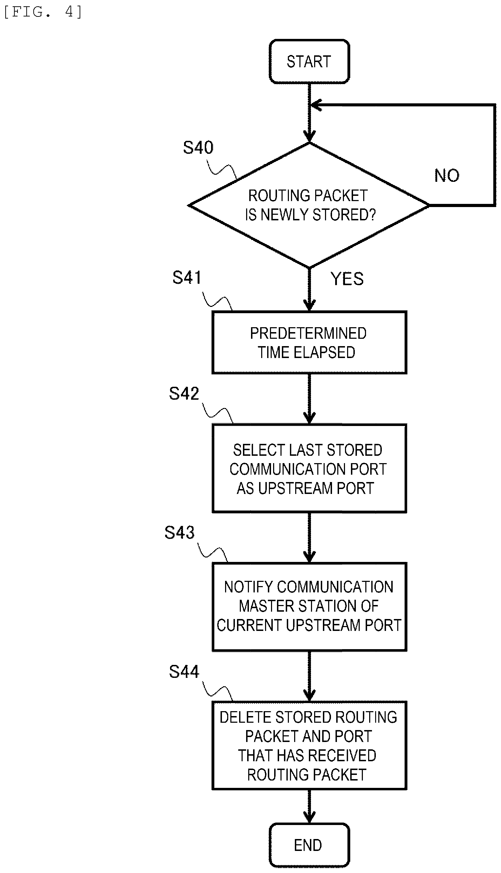

In this example, the upstream port is selected from the communication port 0120 and updated according to the comparison result of FIG. 3. The upstream port constitutes a communication path to be created in this example. FIG. 4 is a flowchart showing processing of selecting an upstream port of the communication slave station 012 according to this example. The processing is preferably performed in parallel with the processing of the flowchart shown in FIG. 3, but may be performed separately.

In step S40 of FIG. 4, the communication slave station 012 keeps the processing on standby until the routing packet 02 is newly stored or received. That is, the communication slave station 012 proceeds to step S32 in FIG. 3, and if the routing packet 02 is newly stored or received (YES), the processing proceeds to step S41. If the routing packet 02 is not stored or received (NO), step S40 is continued.

In step S41, the communication slave station 012 waits for a predetermined communication completion waiting time until the transfer of the routing packet 02 in the distributed control system 01 is completed. After waiting, in step S42, the communication slave station 012 selects the communication port 0120 (a first communication port) last stored or received by the communication slave station 012 itself as the upstream port.

At this time, when another communication port 0120 (a second communication port) is stored as the upstream port in the past, the communication slave station 012 updates the communication port 0120 as the communication port selected in this step.

In step S43, the communication slave station 012 transmits an upstream port notification 050 including upstream port information on the upstream port selected and updated in step S42 from the selected upstream port to an upstream side. In step S44, the communication slave station 012 deletes the routing packet 02 stored therein and the communication port 0120 that has received the routing packet 02. In this way, the processing of the flowchart ends and returns to the start state.

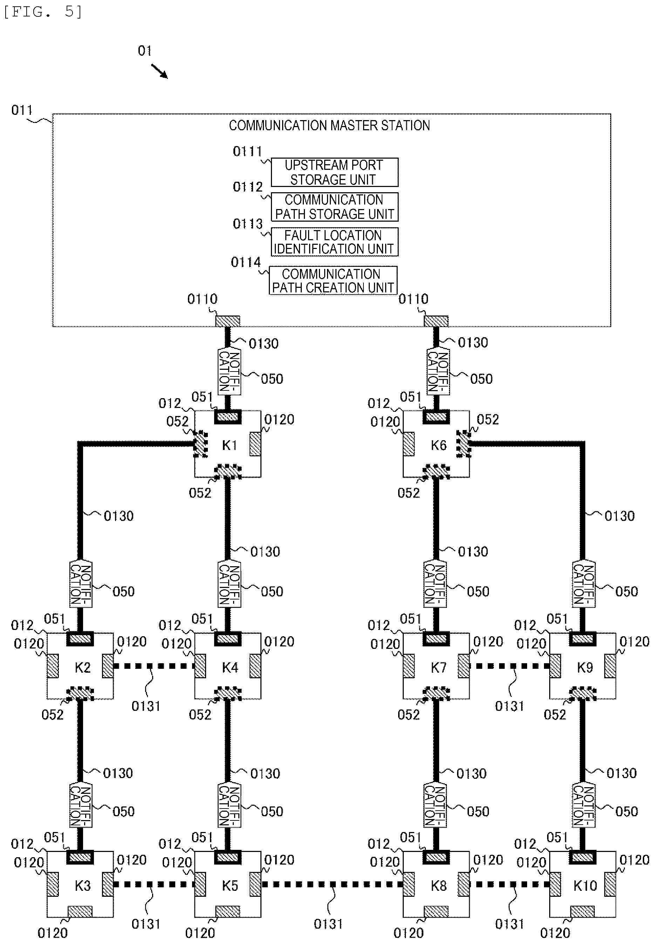

Here, transmission and reception (communication) of the upstream port notification 050 transmitted in step S43 in the distributed control system 01 will be described. FIG. 5 shows transfer of the upstream port notification 050 of the distributed control system 01 in this example. In FIG. 5, the upstream port notification 050 is transferred from the communication slave station 012 as a transmission source to the communication master station 011 by another communication slave station 012. That is, the upstream port notification 050 is transferred in the upstream direction. In FIG. 5, the communication slave station 012 transmits the upstream port notification 050 from an upstream port 051 thereof. When the communication slave station 012 receives the upstream port notification 050 from another communication slave station 012, the processing shown in FIG. 4 ends. When the communication slave station 012 returns to the state of waiting for storage of the new routing packet 02 in step S40, the communication slave station 012 transfers the received upstream port notification 050. Otherwise, the communication slave station 012 holds the upstream port notification 050, and transfers the received upstream port notification 050 after the processing in FIG. 4 ends.

When performing the transfer, the communication slave station 012 selects, as a downstream port 052, its own communication port 0120 that has received the upstream port notification 050. The communication path creation unit 0114 of the communication master station 011 stores the received upstream port notification 050 of each communication slave station 012 in the upstream port storage unit 0111. Further, the communication path creation unit 0114 of the communication master station 011 creates a communication path with the communication slave station 012 by combining the communication channels to which the upstream ports are connected based on the upstream port information indicated by the stored upstream port notification 050. The communication path creation unit 0114 stores the communication path in the communication path storage unit 0112.

According to this example, it is possible to prevent repeated communication between the communication master station 011 and each communication slave station 012 for creating a communication path between the communication master station 011 and each communication slave station 012 in the distributed control system 01. The communication path between the communication master station 011 and each communication slave station 012 in the distributed control system 01 includes the communication channel through which the routing packet 02 is actually transferred. Therefore, for example, even when a communication abnormality due to an initial failure or the like occurs in the distributed control system 01, the communication path includes a communication channel that avoids the failure.

### Example 2

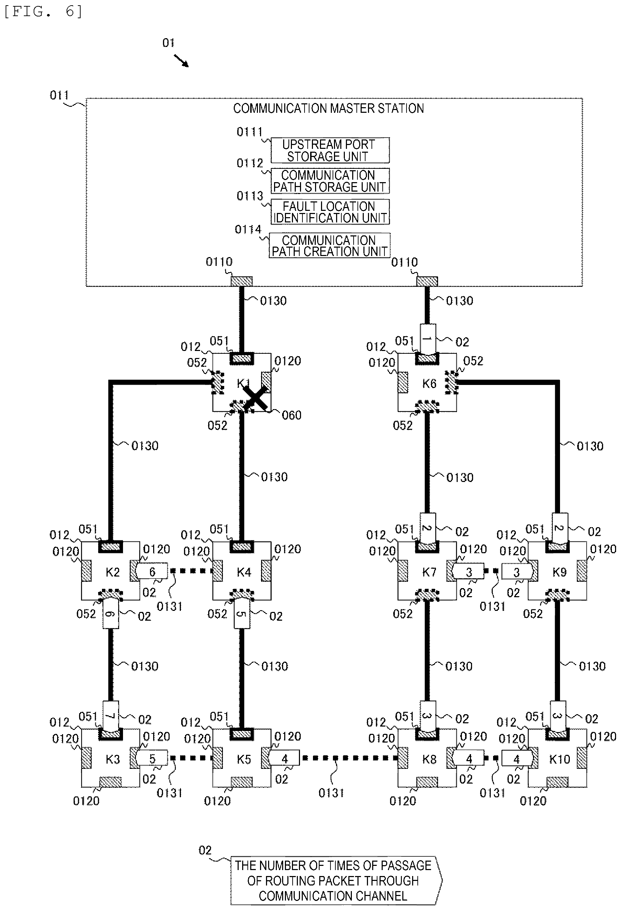

Next, Example 2 shows processing when a failure occurs in the distributed control system 01. FIG. 6 shows transfer of the routing packet 02 in a case where the communication slave station 012 fails in Example 2. In FIG. 6, K1 of the communication slave station 012 of the distributed control system 01 fails. The failed K1 of the communication slave station 012 cannot transfer the routing packet 02. Therefore, any of routing packets 02 shown in FIG. 2 is not transferred. Therefore, in FIG. 6, the routing packet 02 passing through K6 of the communication slave station 012 is transferred to K2 to K5.

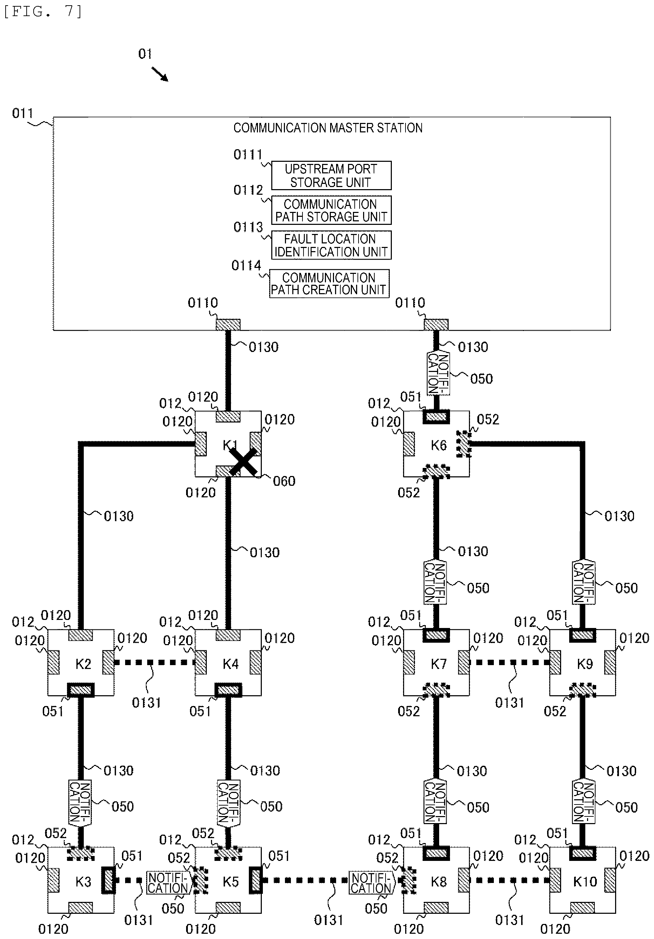

FIG. 7 shows transfer of the upstream port notification 050 in the case where the communication slave station 012 fails in this example. By using the upstream port notification 050, the communication path creation unit 0114 creates a communication path from K2 to K5 of the communication slave station 012 using a bypass path including the reduced communication channel 0131 as the communication path. For example, a communication path of K3 of the communication slave station 012 is a bypass path from the communication master station 011 via K6, K7, K8, and K5. Here, the creation of the bypass path that avoids the failure in this manner leads to identification of a failure location.

The identification of the failure location in this example will be described.

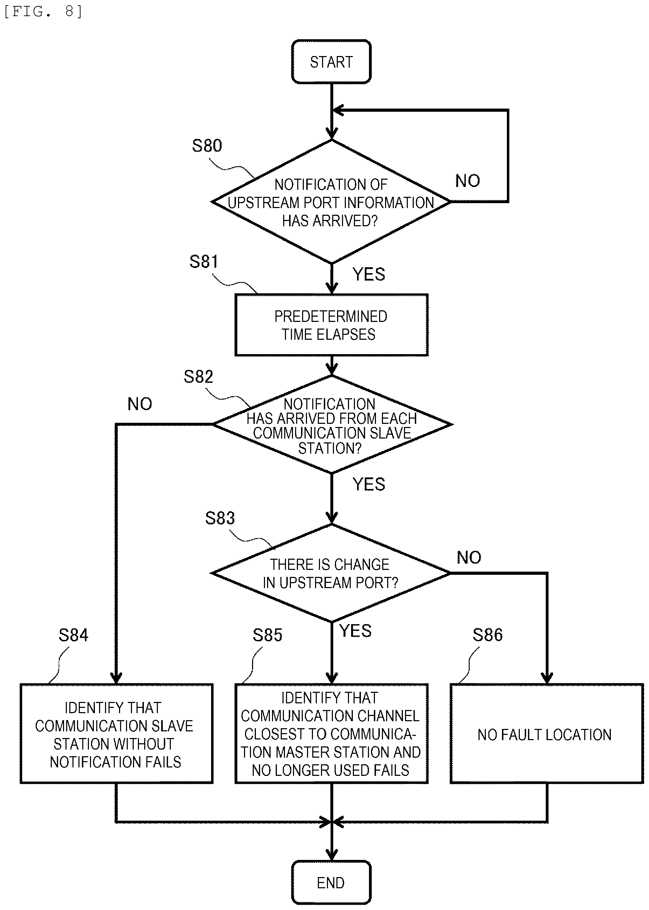

FIG. 8 is a flowchart showing processing of identifying a fault location of the communication master station 011 in this example. First, the communication master station 011 waits until the new upstream port notification 050 is received from the communication slave station 012. In step S80, the communication master station 011 determines whether the upstream port notification 050 is received from the communication slave station 012, that is, whether the upstream port notification 050 arrives. As a result, if arrived (YES), the processing proceeds to step S81. If not arrived (NO), step S80 is continued.

In step S81, the communication master station 011 waits until a predetermined time until the reception of the upstream port notification 050 from the communication slave station 012 is completed elapses. In step S82, the fault location identification unit 0113 determines whether the upstream port notification 050 arrives at the communication master station 011 from each communication slave station 012. As a result, if the determination is positive (YES), the processing proceeds to step S83. If the determination is negative (NO), the processing proceeds to step S84.

In step S84, the fault location identification unit 0113 identifies the fault location as the communication slave station 012 from which the upstream port notification 050 does not arrive. The processing then ends and returns to the start state. In step S83, the fault location identification unit 0113 determines whether there is a change in the upstream port based on the notified upstream port notification. As a result, if the determination is positive (YES), the processing proceeds to step S85. If the determination is negative (NO), the processing proceeds to step S86.

In step S85, the fault location identification unit 0113 identifies the fault location as a communication channel closest to the communication master station 011 in a previous communication path among communication channels that are no longer used for the communication path. The processing then ends and returns to the start state. In step S86, the fault location identification unit 0113 determines that there is no fault location, and then the processing ends and returns to the start state. As described above, when a communication failure occurs in the distributed control system 01, in a case where the fault location identification unit 0113 determines that there is no fault location, it can be estimated that a temporary communication abnormality occurs. In this example, since the communication master station 011 does not receive the notification from the K1 of the communication slave station 012, the determination in step S82 is negative (NO), and the communication master station 011 can identify that the K1 of the communication slave station 012 without the notification fails. That is, in steps S84 to S85, a cause of the communication failure that occurs in the distributed control system 01 is identified.

As described above, according to this example, by performing the processing described in Example 1 in the same manner, information in each communication slave station 012 indicating whether the communication with the communication master station 011 is possible, and which communication channel is used when the communication is possible is aggregated in the communication master station 011. Therefore, it is possible to identify a fault location, and it is possible to generate a bypass path to the communication slave station 012 in the distributed control system 01 in which a fault occurs. In addition, an effect of applying the distributed control system 01 is the same as that of Example 1.

### Example 3

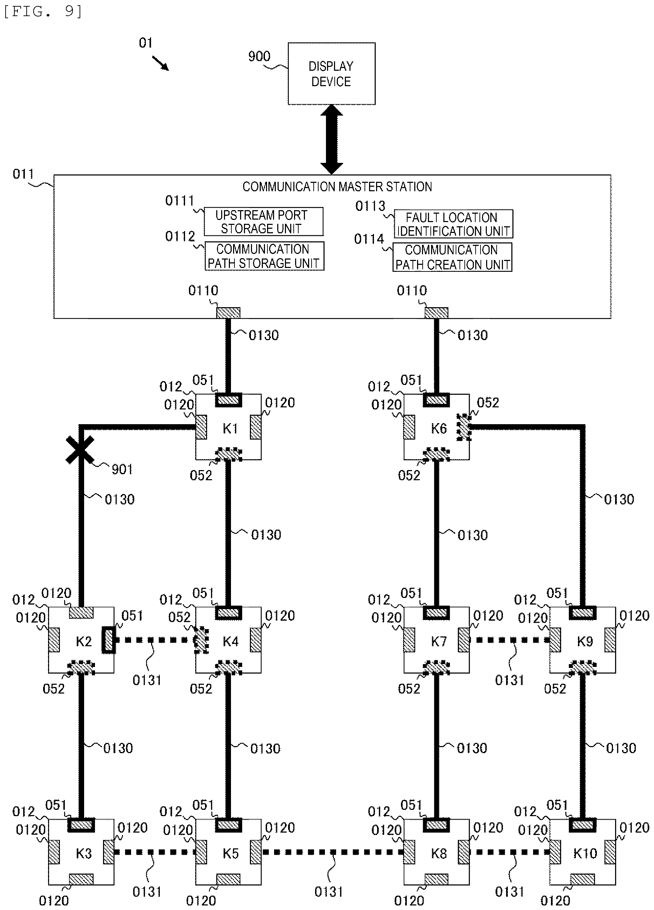

Next, in Example 3, a display function is added to Example 1 and Example 2. FIG. 9 shows a configuration example of the distributed control system 01 according to this example. FIG. 9 is an example showing a state after the upstream port 051 is changed when the normal communication channel 0130 between K1 and K2 of the communication slave station 012 fails. Here, for the K2 of the communication slave station 012, a communication port connected to K4 via the reduced communication channel 0131 is selected as the upstream port 051. A display device 900 is connected to the communication master station 011 and acquires communication path information of the distributed control system 01 from the communication master station 011. The display device 900 can be implemented by a computer such as a PC or a tablet. The display device 900 may be provided with a control function of controlling the distributed control system 01. Next, display contents in the display device 900 will be described.

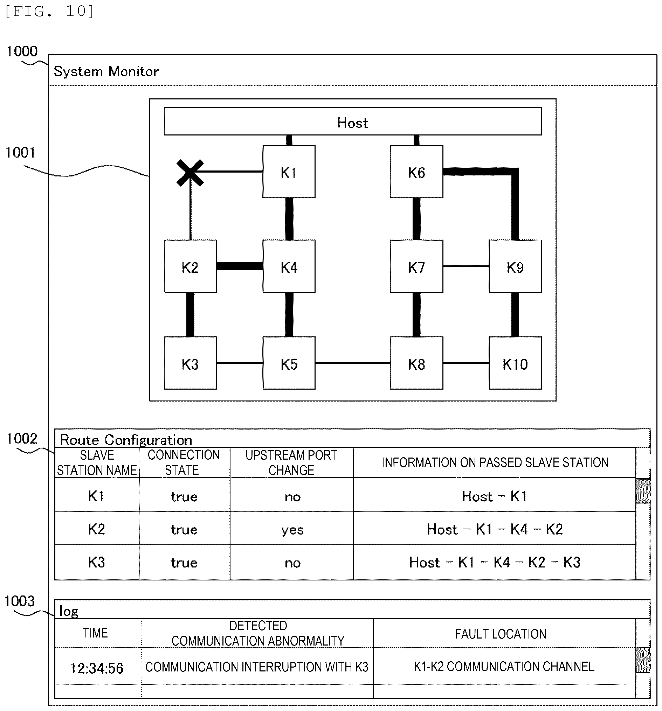

FIG. 10 shows a display example in the display device 900 in this example. In FIG. 10, a display screen 1000 of the display device 900 includes a system status display window 1001, a communication path window 1002, and a log monitoring window 1003. These windows are an example of a display area, and may be displayed in another mode. Among these windows, the system status display window 1001 displays a network configuration of the distributed control system 01 and a fault state of the communication slave station 012 and the communication channel. The system status display window 1001 is used by a user to intuitively recognize a fault location and a communication path of the distributed control system 01.

The communication path window 1002 has a function of displaying a connection state of each communication slave station 012, whether the upstream port is changed, communication path information, and the like. Further, the communication path window 1002 is used by the user to analyze the communication slave station 012 affected by a fault occurring in the distributed control system 01 by displaying the communication path of each communication slave station 012. The log monitoring window 1003 has a function of displaying an execution time when communication path generation is executed, a communication abnormality detected by the distributed control system 01 as an execution reason, and an identified fault location.

According to this example described above, the distributed control system 01 can inform the user of the failure location, and the downtime of the distributed control system 01 can be reduced and the maintenance efficiency can be improved.

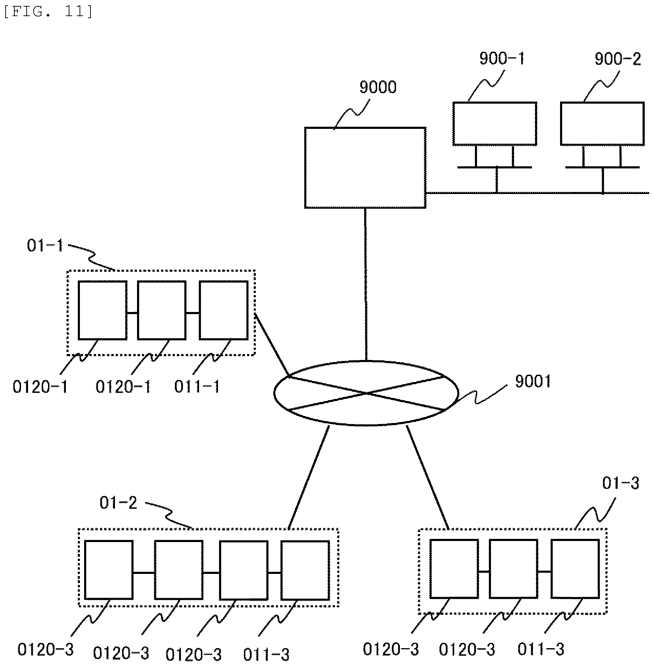

The invention is not limited to the examples described above and includes various modifications and application examples. Here, an application example of the invention will be described. FIG. 11 shows an application example of each example. In this application example, a server device 9000 can manage a plurality of distributed control systems 01. The server device 9000 is connected to a network 9001 and the display device 900. The display device 900 inputs various instructions to the server device 9000 and outputs a processing result of the server device 9000. The output includes the display example in Example 3. The server device 9000 can be implemented by a computer, and can be referred to as a cloud system. The server device 9000 and the display device 900 may be implemented by one device.

The server device 9000 is connected to a plurality of distributed control systems 01 via the network 9001 such as the Internet. As a result, the server device 9000 can receive a communication path created by each distributed control system 01. At least a part of the communication master station 011 in Example 1 may be executed by the server device 9000. In particular, the server device 9000 can create a communication path. The application example has been described above.

The above examples have been described in detail to facilitate understanding of the invention, and the invention is not necessarily limited to those including all the configurations described above. A part of a configuration of a certain example can be replaced with a configuration of another example, and the configuration of another example can be added to the configuration of a certain example. A part of a configuration of each example may be added to, deleted from, or replaced with another configuration.

A part or all of the configurations, functions, processing units, processing methods, and the like described above may be implemented by hardware by, for example, designing with an integrated circuit. In addition, the above configurations, functions, and the like may be implemented by software by a processor interpreting and executing a program for implementing each function. Information such as a program, a table, and a file for implementing each function can be stored in a recording device such as a memory, a hard disk, and a solid state drive (SSD), or in a recording medium such as an IC card, an SD card, and a DVD. In addition, the communication channels are considered to be necessary for explanation, and all the communication channels are not necessarily shown on a product to which the distributed control system 01 is applied.

In each of the above examples, the communication path of the distributed control system 01 and the bypass path at the time of occurrence of a fault can be generated by the same procedure, and the fault location can be identified. In addition, it is possible to prevent periodic communication for creating a communication path. Therefore, since a communication band is not compressed, a real-time property of control communication can be ensured. Since the communication slave station 012 does not need to store the communication path information of the communication slave stations other than the communication slave station 012 itself, the storage capacity corresponding to a scale of the distributed control system 01 can be reduced. Further, in each example, it is not necessary to perform regular communication in order to create a communication path.

### Reference Signs List

01: distributed control system
011: communication master station
0110: communication port of communication master station
0111: upstream port storage unit
0112: communication path storage unit
0113: fault location identification unit
012: communication slave station
0120: communication port of communication slave station
0130: normal communication channel
0131: reduced communication channel
02: routing packet
050: upstream port notification
051: upstream port
052: downstream port
060: fault of communication slave station
900: display device
901: fault of communication channel
1000: display screen
1001: system status display window
1002: communication path window
1003: log monitoring window

## Claims

1. A distributed system comprising:
a communication master station; and
a plurality of communication slave stations connected to the communication master station in a downstream direction of communication, wherein
the communication master station and each of the plurality of communication slave stations are connected to each other via a communication channel,
the plurality of communication slave stations respectively include a plurality of communication ports for performing communication,
any one of the plurality of communication ports is stored in advance as an upstream port for communication in an upstream direction,
a routing packet is transmitted from the communication master station to each of the plurality of communication slave stations,
a first traffic volume indicating a traffic volume of the routing packet from the communication master station is specified in each of the plurality of communication slave stations,
the first traffic volume and a second traffic volume specified before the specification are compared to determine whether a predetermined condition is satisfied,
a first communication port that has received the routing packet is specified in each of the plurality of communication slave stations,
in each of the plurality of communication slave stations, the first communication port is updated as the upstream port when the predetermined condition is satisfied, and
the communication master station creates a communication path from the communication master station in the distributed system by combining the upstream port in each of the plurality of communication slave stations and the communication channel connected to the upstream port.

2. The distributed system according to claim 1, wherein
the predetermined condition is that the first traffic volume is small or that the second traffic volume is not specified.

3. The distributed system according to claim 1, wherein
any one of the number of times of passage of the routing packet through the communication channel, the number of times of passage of the routing packet through the communication slave station from the communication master station, a time it takes for the routing packet to pass from the communication master station, and a physical length that the routing packet passes from the communication master station is used as the traffic volume.

4. The distributed system according to claim 1, wherein
in each of the plurality of communication slave stations, when the upstream port is updated to the first communication port, an upstream port notification indicating that the updated first communication port is selected as the upstream port is transmitted to the communication master station, and
the communication master station generates the communication path using the upstream port notification.

5. The distributed system according to claim 4, wherein
when a communication failure occurs in the distributed system, the communication master station transmits the routing packet.

6. The distributed system according to claim 5, wherein
in a case where the communication failure occurs in the distributed system,
when the upstream port notification is not issued for a predetermined period of time, the communication master station determines that a cause of the communication failure occurs in the corresponding one of the communication slave stations.

7. The distributed system according to claim 6, wherein
when the upstream port notification is received from each of the plurality of communication slave stations, and the communication path is changed, the communication master station determines that the cause of the communication failure occurs in a most upstream communication channel in the communication path before the change.

8. The distributed system according to claim 6 or 7, wherein
the communication master station creates a bypass path for avoiding the cause of the communication failure as the communication path.

9. The distributed system according to claim 4, wherein
in each of the plurality of communication slave stations, an upstream port notification transmitted from a downstream direction of the communication slave station itself is transferred in an upstream direction.

10. The distributed system according to claim 1, wherein
the communication master station periodically transmits the routing packet.

11. A method for creating a communication path in a distributed system including a communication master station and a plurality of communication slave stations connected to the communication master station in a downstream direction of communication, wherein
the communication master station and each of the plurality of communication slave stations are connected to each other via a communication channel,
the plurality of communication slave stations respectively include a plurality of communication ports for performing communication,
any one of the plurality of communication ports is stored in advance as an upstream port for communication in an upstream direction,
a routing packet is transmitted from the communication master station to each of the plurality of communication slave stations,
a first traffic volume indicating a traffic volume of the routing packet from the communication master station is specified in each of the plurality of communication slave stations,
the first traffic volume and a second traffic volume specified before the specification are compared to determine whether a predetermined condition is satisfied,
a first communication port that has received the routing packet is specified in each of the plurality of communication slave stations,
in each of the plurality of communication slave stations, the first communication port is updated as the upstream port when the predetermined condition is satisfied, and
the communication master station creates a communication path from the communication master station in the distributed system by combining the upstream port in each of the plurality of communication slave stations and the communication channel connected to the upstream port.

12. The method for creating a communication path in the distributed system according to claim 11, wherein
the predetermined condition is that the first traffic volume is small or that the second traffic volume is not specified.

13. The method for creating a communication path in the distributed system according to claim 11, wherein
any one of the number of times of passage of the routing packet through the communication channel, the number of times of passage of the routing packet through the communication slave station from the communication master station, a time it takes for the routing packet to pass from the communication master station, and a physical length that the routing packet passes from the communication master station is used as the traffic volume.

14. The method for creating a communication path in the distributed system according to claim 11, wherein
in each of the plurality of communication slave stations, when the upstream port is updated to the first communication port, an upstream port notification indicating that the updated first communication port is selected as the upstream port is transmitted to the communication master station, and
the communication master station generates the communication path using the upstream port notification.

15. The method for creating a communication path in the distributed system according to claim 14, wherein
when a communication failure occurs in the distributed system, the communication master station transmits the routing packet.

16. The method for creating a communication path in the distributed system according to claim 15, wherein
in a case where the communication failure occurs in the distributed system,
when the upstream port notification is not issued for a predetermined period of time, the communication master station determines that a cause of the communication failure occurs in the corresponding one of the communication slave stations.

17. The method for creating a communication path in the distributed system according to claim 16, wherein
when the upstream port notification is received from each of the plurality of communication slave stations, and the communication path is changed, the communication master station determines that the cause of the communication failure occurs in a most upstream communication channel in the communication path before the change.

18. The method for creating a communication path in the distributed system according to claim 16 or 17, wherein
the communication master station creates a bypass path for avoiding the cause of the communication failure as the communication path.

19. The method for creating a communication path in the distributed system according to claim 14, wherein
in each of the plurality of communication slave stations, an upstream port notification transmitted from a downstream direction of the communication slave station itself is transferred in an upstream direction.

20. The method for creating a communication path in the distributed system according to claim 11, wherein
the communication master station periodically transmits the routing packet.
